# EUROPEAN PATENT SPECIFICATION

(11) **EP 4 324 061 B1**
(45) Date of publication and mention of the grant of the patent: **06.11.2024**
(21) Application number: 22721245.3
(22) Date of filing: 13.04.2022
(51) Int. Cl.: H02G 11/02, B65H 75/44

(54) **COILER**
HASPEL
BOBINOIR

(30) Priority: 13.04.2021 US 202163174412 P
(43) Date of publication of application: 21.02.2024
(73) Proprietor: Lapoint, Brian, Chandler, AZ 85226 (US)
(72) Inventor: Lapoint, Brian, Chandler, AZ 85226 (US)
(74) Representative: Arnason Faktor
(86) International application number: PCT/US2022/071684
(87) International publication number: WO 2022/221839

(56) References cited:
- WO-A1-2012/147146
- WO-A1-2018/192955
- CN-A- 111 731 929
- US-B1- 6 971 605

## Description

### BACKGROUND

A person can use a variety of different devices with electrical cords. Example devices include power tools, kitchen appliances, and hair-care equipment (e.g., blow dryers, curling irons, or flat irons). In addition to being disorderly, unwound electrical cords can present a safety hazard. A person may accidentally come in contact with the cord and cause the attached device to drop onto the floor. Or a child may be able to pull on the cord to access and operate the device. In some cases, substances can be accidentally spilled onto the cords and result in unsanitary conditions, especially in medical facilities.

US6971605B1 discloses a device for winding / taking up cables, ribbons, or other coilable structures. This device has a central spool situated between opposing first and second spool end walls, wherein the first spool end wall is rotatable and bears a cable guide thereon which reciprocates along the length of the spool during rotation.

WO 2018192955 discloses a magazine apparatus for coiling and uncoiling at least one line or a line-guiding device. This is achieved via a cylindrical winding body having a cylinder axis and a circumferential face, with respect to which the at least one line can be coiled into and uncoiled out of a spiral-like form having coaxial turns. A guiding apparatus is also present for providing guidance into and out of the spiral-like form.

The above-mentioned documents comprise a shaft betwen a rotating member and a stationary member and configured to be stationary relative to the rotating member but their shaft does not have tapered sections that give the shaft a diameter proximate to the rotating member larger than the diameter proximate he fixed member.

CN111731929A discloses a pay-off device for laying shaftless cables, it has a rotating shaft but back and front plates which are stationary, on each respective side of the shaft. WO 2012/147146 cable storage device that enables a cable to be easily released from a winding core. It has back and front plate that are stationary relative ot one another and only the core (shaft) rotates.

### SUMMARY

Techniques and apparatuses are described that implement a coiler. The coiler can compactly organize a variety of flexible elements while enabling one portion of a flexible element to remain at a fixed position. In this way, the flexible element can be directly connected to a stationary source while the coiler winds and unwinds the flexible element. This makes it convenient for users to readily use the flexible element.

Instead of using a rotating reel, the coiler includes a rotating member and a stationary shaft. The rotating member rotates and passes the flexible element to the shaft. In this manner, the rotating member mimics the action of a person manually coiling the flexible element onto the shaft. Because the shaft remains relatively stationary as the flexible element is coiled or uncoiled, the coiled portion of the flexible element also remains relatively stationary. Consequently, the coiler can forego other complicated or expensive interfaces and enable the flexible element to connect directly to the stationary source.

Aspects described below include a coiler. The coiler includes a fixed member, a shaft, a rotating member, and a rotation mechanism. The fixed member includes an insertion slot configured to secure a first portion of a flexible element. The shaft has first and second ends. The first end is positioned proximate to the fixed member. The rotating member is positioned proximate to the second end of the shaft and is configured to rotatably move about an axis of rotation. The rotating member includes a guide, which is offset from the axis of rotation. The guide is configured to enable a second portion of the flexible element to pass through the rotating member. The rotation mechanism is configured to rotate the rotating member in a first direction around the axis of rotation to coil the second portion of the flexible element around the shaft.

Aspects described below include an apparatus. The apparatus includes a shaft. The apparatus also includes fixed means for securing a first portion of a flexible element. The apparatus additionally includes rotating means for coiling a second portion of the flexible element around the shaft as the shaft as the shaft and the fixed means remain relatively stationary compared to the rotating means.

Aspects described below include a system. The system includes at least one flexible element and a coiler.

Aspects described below also include a method performed by a coiler. The method includes securing a first portion of a flexible element to a fixed member of the coiler. The method also includes rotating a rotating member of the coiler in a first direction around an axis of rotation as the fixed member and a shaft of the coiler remain relatively stationary. The shaft is positioned between the fixed member and the rotating member. The method additionally includes passing a second portion of the flexible element through the rotating member. The method further includes coiling the second portion of the flexible element around the shaft.

The invention is defined in independent claim 1. Embodiments of the invention are defined in the dependent claims.

### BRIEF DESCRIPTION OF DRAWINGS

Apparatuses for and techniques implementing a coiler are described with reference to the following drawings. The same numbers are used throughout the drawings to reference like features and components:
FIG. 1 illustrates an example environment in which a coiler can be implemented;
FIG. 2 illustrates an example system with a coiler;
FIG. 3 illustrates example components of a coiler;
FIG. 4 illustrates an example implementation of a coiler;
FIG. 5 illustrates an example front plate and an example guide of a coiler;
FIG. 6 illustrates examples of a front plate, a shaft, and a back plate of a coiler;
FIG. 7 illustrates an example implementation of a shaft of a coiler;
FIG. 8 illustrates an example implementation of a rotation mechanism of a coiler;
FIG. 9 illustrates an example sequence for coiling a flexible element using a coiler;
FIG. 10 illustrates example coils of a flexible element formed by a coiler; and
FIG. 11 illustrates an example method performed by a coiler.

### DETAILED DESCRIPTION

A person can use a variety of different devices with electrical cords. Example devices include power tools, kitchen appliances, and hair-care equipment (e.g., blow dryers, curling irons, or flat irons). In addition to being disorderly, unwound electrical cords can present a safety hazard. A person may accidentally come in contact with the cord and cause the attached device to drop onto the floor. Or a child may be able to pull on the cord to access and operate the device. In some cases, substances can be accidentally spilled onto the cords and result in unsanitary conditions, especially in medical facilities.

To address this problem, some techniques use a winding system. The winding system spins a reel to wind or unwind a given material, such as an electrical cord or a water hose. A portion of the material that is unwound is aligned approximately parallel to the direction of rotation. As the reel spins, the coiled material spins, which makes it complicated to attach the coiled material to a stationary source, such as an electrical outlet or a water spigot.

To enable the material to be operably coupled to a stationary source, some winding systems include an interface. The interface enables the material to be "indirectly" connected to the stationary source while the material rotates around the reel. One such interface includes a wiper system. The wiper system enables an electrical cord that is wound around the reel to be connected to an electrical outlet. In particular, the wiper system includes internal wiring, which connects the electrical contacts of the electrical cord on the rotating reel to an intermediate electrical cord that connects to the power source. In addition to increasing a cost and complexity of the winding system, the wiper system may have voltage or amperage limitations. As such, the wiper system may not support some electrically-powered devices. If the user is unaware of these limitations, the user may accidentally use the winding system on a device that is not supported by the wiper system. Consequently, the mismatch between the electrical device and the wiper system can damage the electrical device, damage the wiper system, or potentially start a fire.

In contrast, this document describes techniques and devices that implement a coiler. The coiler can compactly organize a variety of flexible elements while enabling one portion of a flexible element to remain at a fixed position. In this way, the flexible element can be "directly" connected to a stationary source (e.g., without an interface such as the wiper system) while the coiler winds and unwinds the flexible element. This makes it convenient for users to readily use the flexible element.

Instead of using a rotating reel, the coiler includes a rotating member and a stationary shaft. The rotating member rotates and passes the flexible element to the shaft. In this manner, the rotating member mimics the action of a person manually coiling the flexible element onto the shaft. Because the shaft remains relatively stationary as the flexible element is coiled or uncoiled, the coiled portion of the flexible element also remains relatively stationary. Consequently, the coiler can forego other complicated or expensive interfaces and enable the flexible element to connect directly to the stationary source.

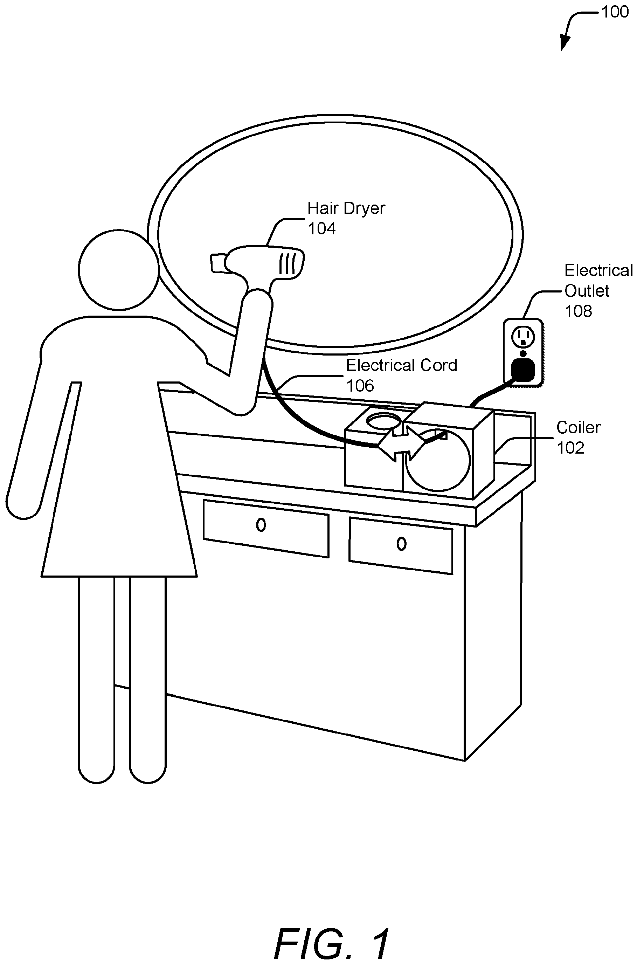

FIG. 1 illustrates an example environment 100 in which a coiler 102 can operate. In the environment 100, a user operates a hair dryer 104. The hair dryer 104 includes an electrical cord 106, which is plugged into an electrical outlet 108. When not in use, the user can haphazardly store the hair dryer 104 on a counter. However, this can create a disorderly mess or make it challenging to keep the hair dryer 104 out of reach of small children. Alternatively, the user can unplug the hair dryer 104 from the electrical outlet and store the hair dryer 104 in a drawer. However, this can present an daily inconvenience to the user as the user continuously plugs and unplugs the electrical cord 106 from the electrical outlet 108.

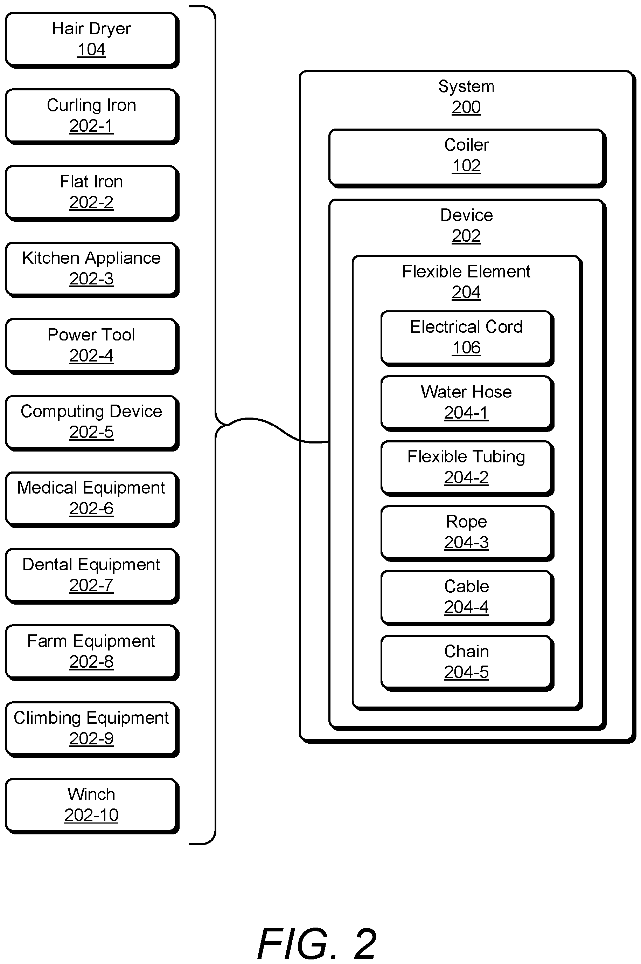

To address these problems, the coiler 102 can coil and uncoil the electrical cord 106 while enabling the electrical cord 106 to be attached to the electrical outlet 108. In this way, the coiler 102 can neatly organize the electrical cord 106 within a small area and keep the electrical cord 106 out of the way of small children or accidental spills when the hair dryer 104 is not in use. In some implementations, the coiler 102 can include a stand to store the hair dryer 104. The coiler 102 can coil and uncoil a variety of different materials. As such, the coiler 102 has many applications in a home environment as well as a variety of different industries, as further described with respect to FIG. 2.

FIG. 2 illustrates an example system 200 that includes the coiler 102. In the depicted configuration, the system 200 also includes at least one device 202 with at least one flexible element 204 (or flexible medium). The flexible element 204 is composed of a type of material that can flex and coil. A shape of a cross section of the flexible element 204 can be round (e.g., circular or oval) or rectangular (e.g., flat). The flexible element 204 can include a single strand of flexible material or multiple strands of flexible material. Example types of flexible elements 204 can include the electrical cord 106, a water hose 204-1, flexible tubing 204-2, rope 204-3, cable 204-4, or chain 204-5.

In general, the flexible element 204 includes two ends. A first end of the flexible element 204 can be connected to a source or a fixed point. Example sources can include a power source (e.g., the electrical outlet 108), a water source (e.g., a water spigot), or a storage tank containing liquid or gas. A second end of the flexible element 204 can be connected to the device 202. In some devices 202, the second end is attached to or integrated within the device 202. In other devices 202, the second end can be optionally removed or disconnected from the device 202. The flexible element 204 can allow particles to flow from the source to the device 202. For example, the flexible element 204 can allow electrical current or fluid (in liquid or gas form) to flow from the source to the device 202. The flow of particles provided by the flexible element 204 can enable the device 202 to operate.

The coiler 102 can coil (e.g., wind or wrap) the flexible element 204 for convenient storage or uncoil (e.g., unwind or unwrap) the flexible element 204 to enable a user to operate the device 202. The coiler 102 enables the device 202 to operate while the flexible element 204 is in a coiled state, an uncoiled state, or a partially-coiled state.

The device 202 can include a variety of different electrical devices. In this case, the flexible element 204 includes the electrical cord 106. Example electrical devices 202 can include hair equipment, such as the hair dryer 104, a curling iron 202-1, or a flat iron 202-2. As another example, the device 202 can include a kitchen appliance 202-3, such as a mixer, a toaster, or a food processor. The device 202 can alternatively be a power tool 202-4, such as a corded drill or an angle grinder. Other types of electrical devices 202 include computing devices 202-5 or medical equipment 202-6. Example computing devices 202-5 include a smartphone or a laptop. Example medical equipment 202-6 can include a sensor, such as a heart-monitoring sensor.

Other types of devices 202 use fluids (e.g. liquids or gas). In this case, the flexible element 204 can include the water hose 204-1 or the flexible tubing 204-2. Example fluid-based devices 202 can include medical equipment 202-6 or dental equipment 202-7. The medical equipment 202-6 can include an oxygen mask or an intravenous (IV) system. The dental equipment 202-7, can include a suction device or an ultrasonic scaler. Other types of fluid-based devices 202 include farm equipment 202-8, such as a tank sprayer.

Still other types of devices 202 rely on the tension of the flexible element 204. In this case, the flexible element 204 can include the rope 204-3, the cable 204-4, or the chain 204-5. Example tension-based devices 202 can include climbing equipment 202-9, such as a lifeline, or a winch 202-10.

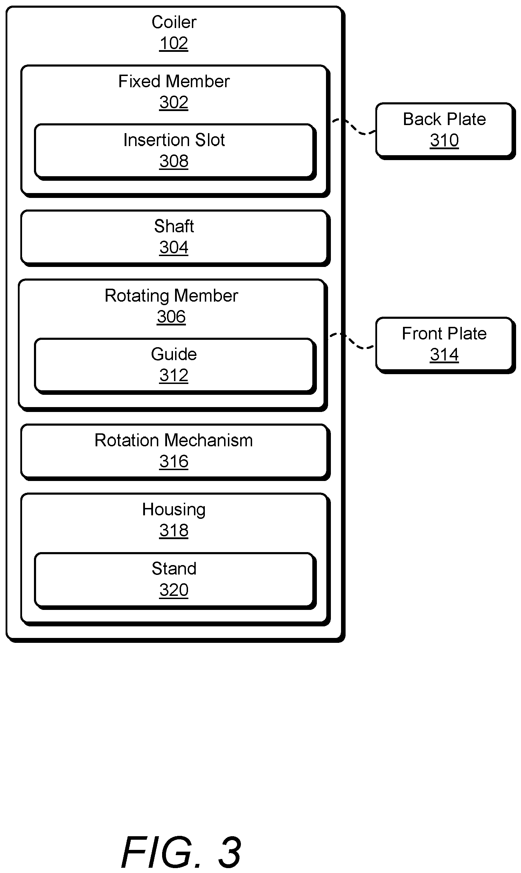

In general, the coiler 102 can be used interchangeably with a variety of different devices 202, including those with different power requirements. As such, a user can safely use the coiler 102 with the hair dryer 104 or a power tool 202-4. Other systems 200 can include the coiler 102 and the flexible element 204 without including a device 202. For example, the system 200 can include the coiler 102 and the water hose 204-1. The coiler 102 is further described with respect to FIG. 3.

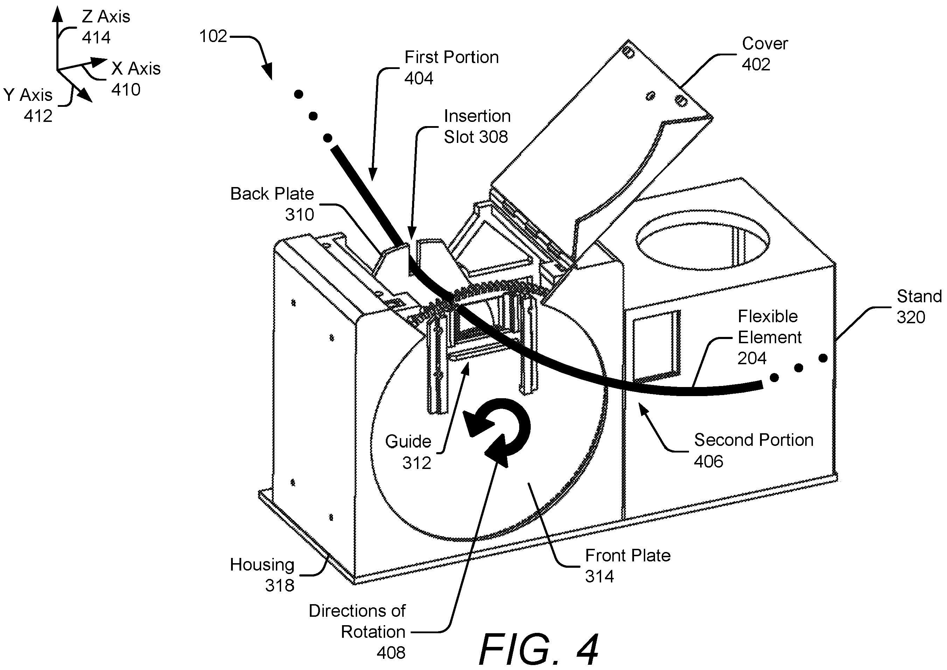

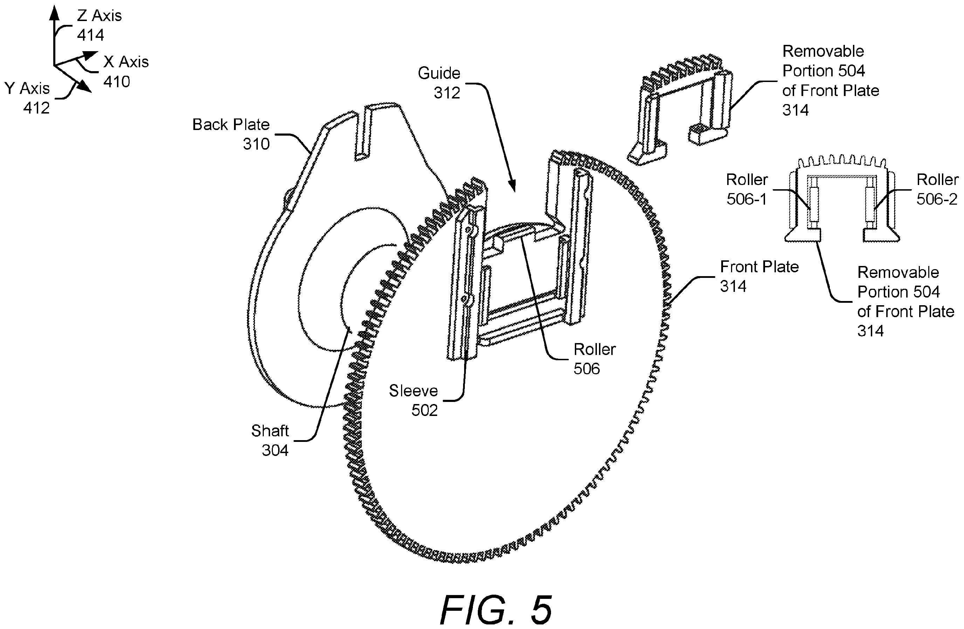

FIG. 3 illustrates example components of the coiler 102. In the depicted configuration, the coiler 102 includes at least one fixed member 302, at least one shaft 304, and at least one rotating member 306. The fixed member 302 includes an insertion slot 308. The insertion slot 308 receives (e.g., accepts) a section of the flexible element 204 and secures a first portion of the flexible element 204 (e.g., holds the first portion of the flexible element 204 stationary or prevents the first portion of the flexible element 204 from coiling). In some situations, an end of the flexible element 204 that is associated with the first portion of the flexible element 204 is connected to a stationary source. The fixed member 302 is implemented as a back plate 310, which is further described with respect to FIGs. 4 and 5.

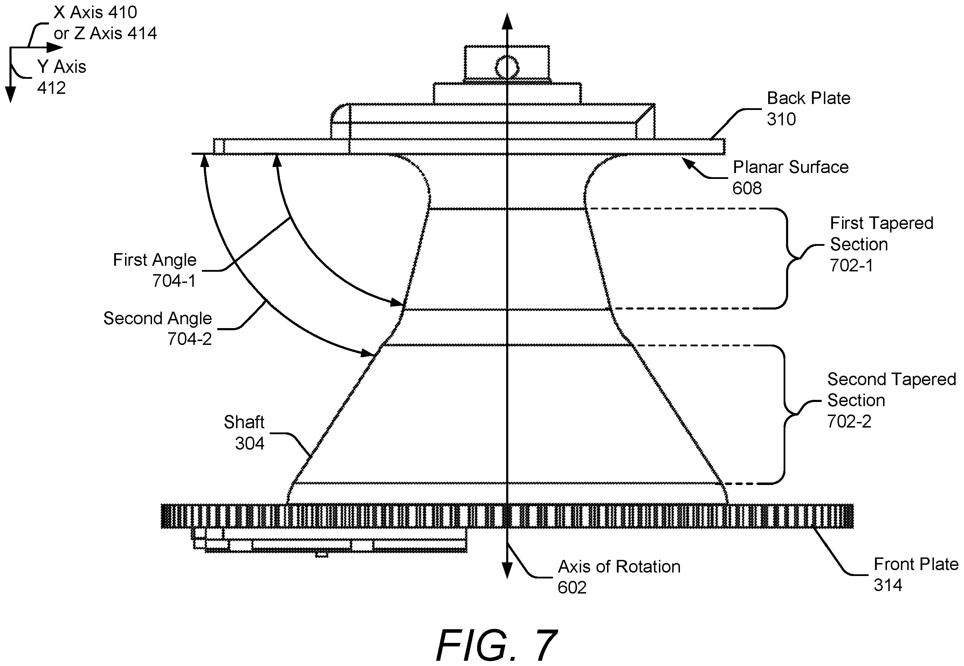

The shaft 304 provides a support for the flexible element 204 to coil around. In some aspects, the shaft 304 can have a tapered structure to assist the flexible element 204 in coiling around the shaft 304 in an orderly fashion. A length of the shaft 304 can be designed to fit a particular length of the flexible element 204. A diameter of the shaft 304 can be tailored to enable the flexible element 204 to neatly coil around the shaft 304. Such shaft dimensions (e.g., structure, length, diameter) can be adapted to enable the flexible element 204 to be wound around the shaft 304 in substantially concentric rings. An example design of the shaft 304 is further described with respect to FIG. 7.

The rotating member 306 performs the action of coiling and uncoiling the flexible element 204. In some implementations, the rotating member 306 has a circular shape. The rotating member 306 includes a guide 312, which enables the flexible element 204 to pass through the rotating member 306 and presents the flexible element 204 at an approximate 90 degree angle to the direction of rotation. In some cases, the angle is approximately equal to 80, 85, 88, 92, 95, or 100 degrees. In general, the term "approximately" can mean that any of the angles can be within +/-10% of a specified value or less (e.g., within +/- 5%, +/- 3%, or +/-2% of a specified value). The guide 312 represents an opening, cutout, gap, or hole, which is present within the rotating member 306. In general, a size of the guide 312 is larger than a cross-sectional size (e.g., diameter) of the flexible element 204 to reduce tension or stress on the flexible element 204 as it passes through the rotating member 306. The guide 312 can also include at least one roller, which freely rotates to reduce friction between the guide 312 and the flexible element 204. An example implementation of the roller is further described with respect to FIG. 5. The rotating member 306 is implemented as a front plate 314, as further described with respect to FIGs. 4 and 5.

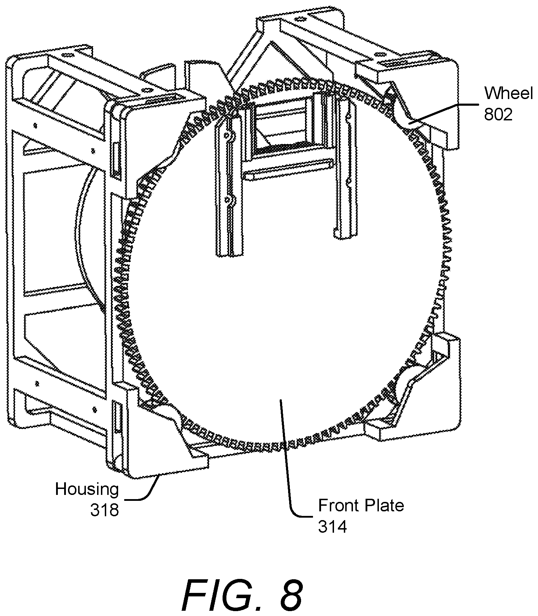

The coiler 102 also includes at least one rotation mechanism 316. The rotation mechanism 316 rotates the rotating member 306. The rotation mechanism 316 can be driven manually or mechanically. In example implementations, the rotation mechanism 316 includes an electric motor, a spring, or a hand crank. The rotation mechanism 316 causes the rotating member 306 to selectively rotate counter-clockwise or clockwise. Accordingly, the rotation mechanism 316 can include an interface enabling the user to specify the direction of rotation. If the rotation mechanism 316 includes an electric motor, the interface can include buttons enabling the user to cause the coiler 102 to coil or uncoil the flexible element 204. The rotation mechanism 316 is further described with respect to FIG. 8.

The coiler 102 can optionally include a housing 318. In an example, the housing 318 encloses the fixed member 302, the shaft 304, the rotating member 306, and the rotation mechanism 316. In this way, the housing 318 can protect these components as well as a coiled portion of the flexible element 204 from sun exposure and weather. The housing 318 can optionally include at least one stand 320, which can hold an end of the flexible element 204 or the device 202 that is attached to the flexible element 204. For example, the stand 320 can include an opening for placing the hair dryer 104, the curling iron 202-1, the flat iron 202-2, or the power tool 202-4. In some aspects, the stand 320 can be heat or corrosion resistant.

The fixed member 302, the shaft 304, the rotating member 306, portions of the rotation mechanism 316, and the housing 318 can be built from a variety of different materials, including plastic, metal, wood, or some combination thereof. The coiler 102 is further described with respect to FIG. 4.

FIG. 4 illustrates an example implementation of the coiler 102. In the depicted configuration, the housing 318 includes the stand 320 and a cover 402. The housing 318 encloses at least a portion of the front plate 314, at least a portion of the back plate 310, and the shaft 304. In FIG. 4, the shaft 304 is positioned behind the front plate 314 and is not directly visible in the illustrated orientation of the coiler 102. The cover 402 is attached to the housing 318 via a hinge, which enables the cover 402 to provide a user access to the insertion slot 308 and the guide 312.

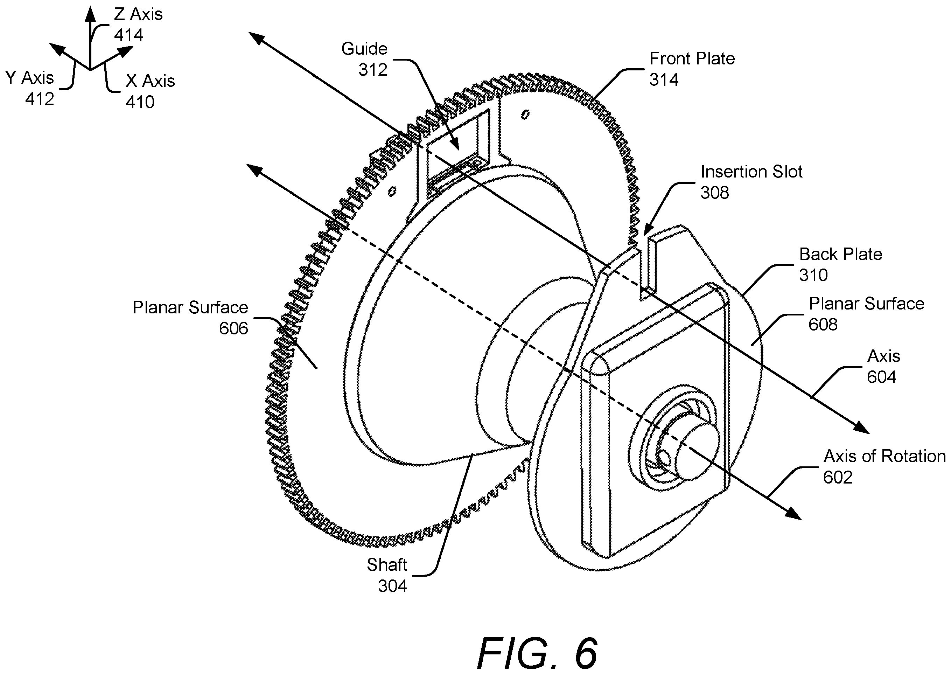

In FIG. 4, a length of the housing 318 is along a first axis 410 (X axis 410), a width of the housing 318 is along a second axis 412 *(Y* axis 412), and a height of the housing 318 is along a third axis 414 (Z axis 414). The front plate 314 and the back plate 310 have planar surfaces oriented across the first axis 410 and the third axis 414. Accordingly, the front plate 314 and the back plate 310 are arranged substantially parallel to each other. The length of the shaft 304 is oriented along the second axis 412 (as shown in FIG. 6). In this manner, the length of the shaft 304 is substantially perpendicular to the planar surfaces of the front plate 314 and the back plate 310.

To position the flexible element 204 within the coiler 102, the user opens the cover 402 and places a first section of the flexible element 204 in the insertion slot 308. The insertion slot 308 secures a first portion 404 of the flexible element 204, which prevents the first portion 404 of the flexible element 204 from substantially moving as the coiler 102 operates. Because the insertion slot 308 holds the first portion 404 of the flexible element 204 stationary (or at least stationary relative to the shaft 304), the coiler 102 does not coil the first portion 404 of the flexible element 204 around the shaft 304.

The first portion 404 of the flexible element 204 can include an end (e.g., a first end) of the flexible element 204, which the user may connect to a stationary source, such as an electrical outlet 108 or a water spigot. In general, the first portion 404 of the flexible element 204 includes a portion of the flexible element 204 that exists between the insertion slot 308 and the first end of the flexible element 204, which can be connected to the stationary source or the fixed point. As such, a majority of the first portion 404 is positioned outside of the housing 318.

In some situations, the user can pass a second portion 406 of the flexible element 204 through the guide 312. In general, the second portion 406 of the flexible element 204 includes a portion of the flexible element 204 that is between the insertion slot 308 and an end (e.g., a second end) of the flexible element 204 that is connected to the device 202 or is handled by the user. In contrast to the first portion 404 of the flexible element 204, the coiler 102 can coil the second portion 406 of the flexible element 204 around the shaft 304.

To assist the user in placing the second portion 406 of the flexible element 204 through the guide 312, the front plate 314 can optionally include a removable portion, as further described with respect to FIG. 5. This can make it easier for the user to place the second portion 406 of the flexible element 204 through the guide 312, especially in situations in which the flexible element 204 is significantly long or the flexible element 204 is connected to a device 202 that cannot fit through the guide 312.

To use the coiler 102, a user activates the rotation mechanism 316, which causes the front plate 314 to rotate in a first direction to coil the flexible element 204. As the front plate 314 rotates, the second portion 406 of the flexible element 204 moves through the guide 312 and coils around the shaft 304. To uncoil the flexible element 204, the user can activate the rotation mechanism 316 to cause the front plate 314 to rotate in a second direction, which is opposite the first direction. As an example, the first direction can be a clockwise direction and the second direction can be a counter-clockwise direction, or vise-versa. In FIG. 4, these two directions are represented by directions of rotation 408.

While the front plate 314 rotates, the back plate 310 and the shaft 304 remain relatively stationary. Consequently, the tension on the flexible element 204 and the rotation of the front plate 314 relative to the stationary back plate 310 causes the flexible element 204 to coil or uncoil. Because the back plate 310 enables the first portion 404 of the flexible element 204 to remain relatively stationary, the flexible element 204 can be directly connected to a stationary source (e.g., the electrical outlet 108 or a water spigot) or a fixed position.

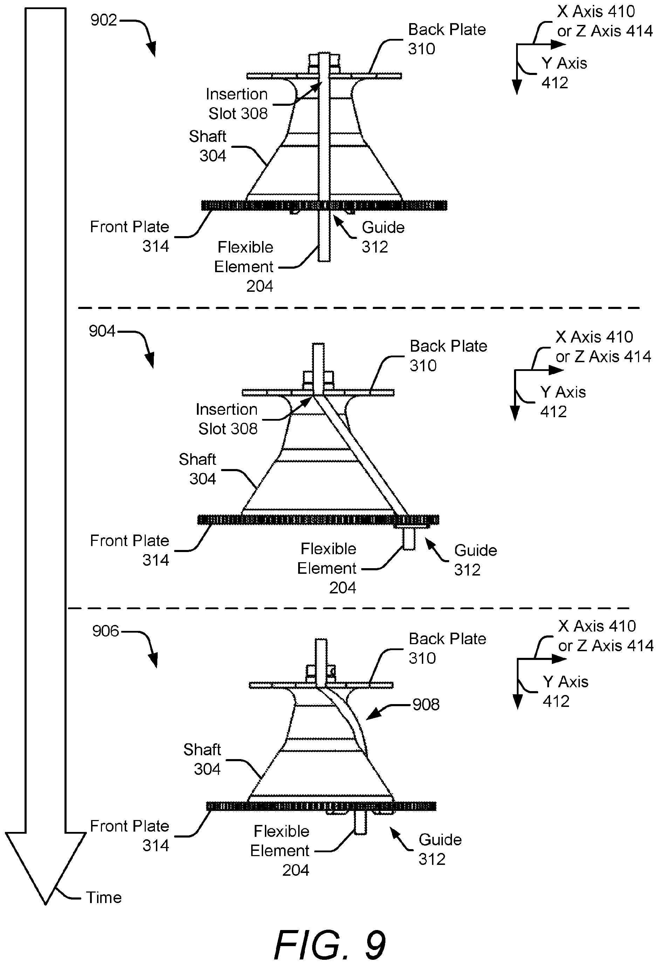

Although not shown in FIG. 4, other implementations of the coiler 102 can include multiple guides 312 and multiple insertion slots 308 to enable simultaneous coiling and uncoiling of multiple flexible elements 204. For example, the front plate 314 in FIG. 4 can include a second guide positioned opposite the guide 312, and the back plate 310 can include a second insertion slot positioned opposite the insertion slot 308. As such, the second insertion slot 308 can secure a first portion of a second flexible element while the second guide enables a second flexible element to pass through the front plate 314 as the front plate 314 rotates. An illustration of the flexible element 204 being partially-coiled is further described with respect to FIG. 9. Example implementations of the guide 312 and the front plate 314 are further described with respect to FIG. 5.

FIG. 5 illustrates an example front plate 314 and an example guide 312 of the coiler 102. In the depicted configuration, the front plate 314 includes a sleeve 502 and a removable portion 504. The sleeve 502 secures the removable portion 504 in place during operation (e.g., as the front plate 314 rotates). However, the user can optionally slide the removable portion 504 out of the sleeve 502 to access the guide 312. By removing the removable portion 504, the user can directly access the guide 312 and lay a section of the flexible element 204 across the guide 312. After this section of the flexible element 204 is placed across the guide 312, the user can slide the removable portion 504 back into the sleeve 502.

In an alternative implementation (not shown), the front plate 314 can include a snap closure instead of the removable portion 504. The snap closure can snap in place across the guide 312 or rotatably move (e.g., swing) away via a hinge to allow a user access to the guide 312.

In FIG. 5, the guide 312 is shown to include at least one roller 506, which can freely rotate about a central axis (not illustrated). The roller 506 is positioned on one side of the guide 312 and is designed to come in contact with (e.g., abut) the flexible element 204. As the flexible element 204 moves through the guide 312, the roller 506 rolls. This rolling action can reduce the friction between the guide 312 and the flexible element 204 in comparison to implementations in which the flexible element 204 slides across a side of the guide 312.

In other implementations, the guide 312 can include multiple rollers 506. For example, the guide 312 can include two rollers 506 on opposite sides or four rollers 506 on individual sides. The rollers 506 can be installed within the front plate 314 or as part of the removable portion 504 of the front plate 314. As an example, the removable portion 504 can have two rollers 506 on opposite sides (e.g., one roller 506-1 on the left side and another roller 506-2 on the right side). Additional features of the coiler 102 are further described with respect to FIG. 6.

FIG. 6 illustrates examples of the front plate 314, the shaft 304, and the back plate 310 of the coiler 102. In the depicted configuration, the shaft 304 is positioned between the front plate 314 and the back plate 310 such that a length of the shaft 304 is oriented along the second axis 412. In some aspects, the shaft 304 has a first end that is positioned proximate to the back plate 310 and a second end that is positioned proximate to the front plate 314. For a compact design, the first end of the shaft 304 can abut the back plate 310 and/or the second end can abut the front plate 314. In an example implementation, the front plate 314 is connected to a rod, which passes through a center of the shaft 304 and can spin freely. In some implementations, the rod also passes through the back plate 310.

An axis of rotation 602 passes through a center of the front plate 314 and is parallel to the second axis 412. A center of the shaft 304 is positioned on the axis of rotation 602. A planar surface 606 of the front plate 314 and a planar surface 608 of the back plate 310 can be approximately perpendicular to the axis of rotation 602.

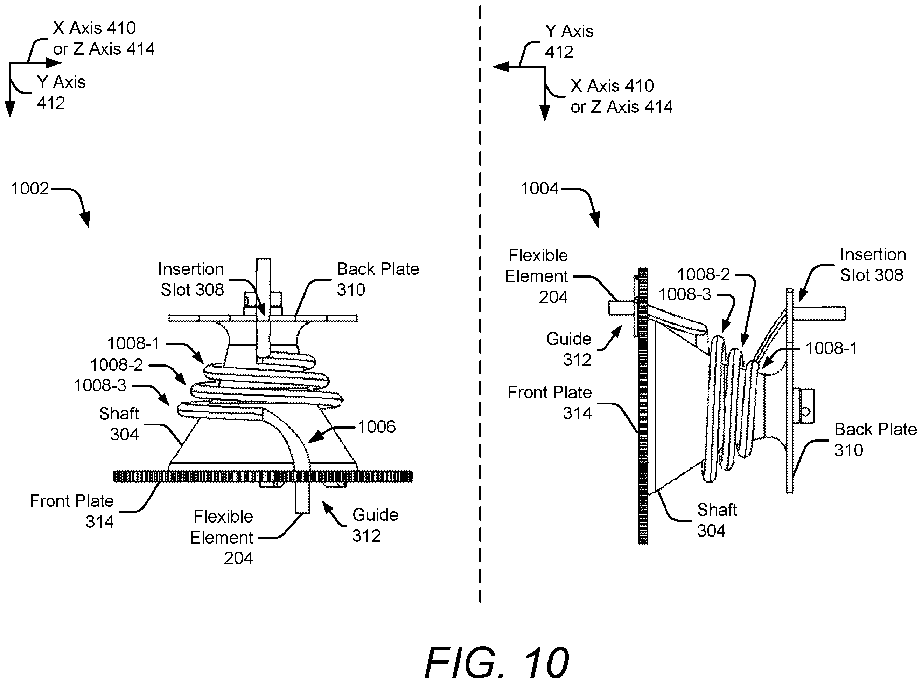

As shown in FIG. 6, the guide 312 is offset from the axis of rotation 602. Also, the insertion slot 308 can be offset from the axis of rotation 602 by a similar or different amount as the guide 312. In general, a portion of the flexible element 204 that is placed within the insertion slot 308 (e.g., a small section of the first portion 404 of the flexible element 204) is aligned with an axis 604, which is approximately parallel to the axis of rotation 602. For example, the portion of the flexible element 204 that is positioned within the insertion slot 308 is positioned to longitudinally extend in a direction that is substantially aligned with the axis 604. Also, another portion of the flexible element 204 that passes through the guide 312 (e.g., a small section of the second portion 406 of the flexible element 204) is aligned with the axis 604 (or another axis that is approximately parallel to the axis of rotation 602). For example, the portion of the flexible element 204 that is positioned within the guide 312 is positioned to longitudinally extend in a direction that is substantially aligned with the axis 604. In this manner, the guide 312 presents the flexible element 204 in a manner that is perpendicular to the direction of rotation, as further described with respect to FIGs. 9 and 10. A design of the shaft 304 enables the flexible element 204 to be coiled, as further described with respect to FIG. 7.

FIG. 7 illustrates an example implementation of the shaft 304 of the coiler 102. The shaft 304 includes at least one tapered section 702. In general, the tapered section 702 enables the flexible element 204 to slide towards the back plate 310 and neatly coil around the shaft 304, as shown in FIGs. 9 and 10. In an example implementation, the tapered section 702 has a slope that forms an angle relative to a planar surface 608 of the back plate 310 (e.g., an angle between the second axis 412 and the first axis 410 or the third axis 414). The angle can be between approximately 60 and 80 degrees, between approximately 62 and 78 degrees, or between approximately 65 and 75 degrees. In some cases, the angle is approximately equal to 60, 65, 70, 75, or 80 degrees. In general, the term "approximately" can mean that any of the angles can be within +/- 5% of a specified value or less (e.g., within +/- 5%, +/- 3%, or +/-2% of a specified value).

In the depicted configuration, the shaft 304 includes a first tapered section 702-1 and a second tapered section 702-2. The first tapered section 702-1 is positioned proximate to the back plate 310, and the second tapered section 702-2 is positioned proximate to the front plate 314. The first tapered section 702-1 has a slope with a first angle 704-1 relative to the planar surface 608 of the back plate 310. The second tapered section 702-2 has a slope with a second angle 704-2 relative to the planar surface 608 of the back plate 310. The first angle 704-1 is greater than the second angle 704-2 (e.g., by at least 1, 5, 10, or 15 degrees). As an example, the first angle 704-1 can be approximately 78 degrees, and the second angle 704-2 can be approximately 62 degrees.

According to the invention, the shaft 304 includes multiple tapered sections 702, the angles of the slopes of the tapered sections 702 decreases as the tapered sections 702 are positioned closer to the front plate 314. In this way, the shaft 304 has a larger diameter closer to the front plate 314 and a smaller diameter closer to the back plate 310. Components of the rotation mechanism 316 are further described with respect to FIG. 8.

FIG. 8 illustrates an example implementation of the rotation mechanism 316 of the coiler 102. In the depicted configuration, the rotation mechanism 316 includes at least one wheel 802 (e.g., one wheel, two wheels, or four wheels) and an electrical motor (not shown). The electrical motor causes the wheel 802 to rotate in a specified direction.

The wheel 802 is in contact with an edge of the front plate 314. As the wheel 802 rotates, the wheel 802 causes the front plate 314 to rotate. In some implementations, the front plate 314 and the wheel 802 are implemented as intermeshing gears. Aspects of the rotation of the front plate 314 are further described with respect to FIGs. 9 and 10.

FIG. 9 illustrates an example sequence for coiling the flexible element 204. At 902, the flexible element 204 is positioned across the insertion slot 308 of the back plate 310 and through the guide 312 of the front plate 314. If the guide 312 is approximately aligned with the insertion slot 308 along the axis 604, a length of the flexible element 204 between the guide 312 and the insertion slot 308 can be approximately parallel to the second axis 412.

At 904, the front plate 314 rotates clockwise such that the guide 312 moves or revolves towards the right of FIG. 9. Due to the tension applied from the insertion slot 308 securing the first portion 404 of the flexible element 204, the flexible element 204 begins to coil around the shaft 304.

At 906, the front plate 314 continues to rotate clockwise such that the guide 312 moves or revolves towards the left of FIG. 9. This causes the flexible element 204 to begin to coil around the shaft 304, as shown at 908. Also at 908, the flexible element 204 begins to bend and form an approximate 90 degree angle between the insertion slot 308 and the guide 312. In general, this angle forms along the second axis 412 and a plane defined by the first axis 410 and the third axis 414.

The tension applied from the insertion slot 308 securing the first portion 404 of the flexible element 204 and the tapered sections 702-1 and 702-2 of the shaft 304 cause the flexible element 204 to form a first coil closer to the back plate 310 compared to the front plate 314. As the front plate 314 rotates, additional coils are formed, as further described with respect to FIG. 10.

FIG. 10 illustrates example coils of the flexible element 204, which form around the shaft 304. At 1002, a top-down view of the front plate 314, the back plate 310, and the flexible element 204 is shown. At 1004, a side view of the front plate, 314, the back plate 310, and the flexible element 204 is shown. As the front plate 314 rotates, the guide 312 presents the flexible element 204 in a manner that is parallel to the axis of rotation 602 and perpendicular to the direction of rotation. As a result, the flexible element 204 forms an approximate 90 degree angle shown at 1006. In particular, the flexible element 204 bends approximately 90 degrees between a coiled portion of the flexible element 204 and a portion of the flexible element that is positioned through the guide 312.

In this example, the flexible element 204 is coiled three times around the shaft 304 to form coils 1008-1, 1008-2, and 1008-3. Due to the tapered sections 702-1 and 702-2 of the shaft 304, the coils 1008-1 to 1008-3 are arranged in an orderly fashion. In particular, a first coil 1008-1 forms proximate to the back plate 310, a second coil 1008-2 forms between the first coil 1008-1 and the front plate 314, and a third coil 1008-3 forms between the second coil 1008-2 and the front plate 314. Sometimes, the coils 1008-1 to 1008-3 can abut adjacent coils 1008. For example, the coil 1008-2 can abut the coils 1008-1 and 1008-3. Although not explicitly shown, multiple layers of coils 1008 can form as additional portions of the flexible element 204 coil around the shaft 304.

### Example Method

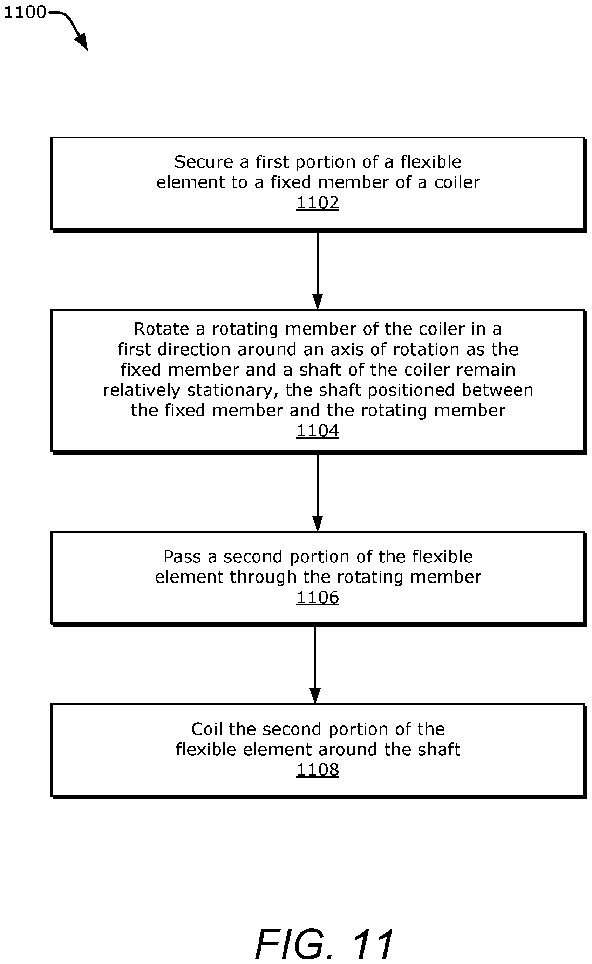

FIG. 11 depicts an example method 1100 for performing operations of coiling a flexible element using a coiler. Method 1100 is shown as sets of operations (or acts) performed but not necessarily limited to the order or combinations in which the operations are shown herein. Further, any of one or more of the operations may be repeated, combined, reorganized, or linked to provide a wide array of additional and/or alternate methods. In portions of the following discussion, reference may be made to the environment 100 of FIG. 1, and entities detailed in FIG. 2 or 3, reference to which is made for example only. The techniques are not limited to performance by one entity or multiple entities operating on one device.

At 1102, a first portion of a flexible element is secured to a fixed member of a coiler. For example, the insertion slot 308 of the fixed member 302 (e.g., the back plate 310) secures the first portion 404 of the flexible element 204 to the fixed member 302, as shown in FIG. 4. In this way, the coiler 102 does not coil the first portion 404 of the flexible element 204 around the shaft 304. Due the insertion slot 308 securing the first portion of the flexible element, the first portion 404 of the flexible element 204 can be substantially stationary as the coiler 102 coils or uncoils the second portion 406 of the flexible element 204.

At 1104, a rotating member of a coiler is rotated in a first direction around an axis of rotation as the fixed element and a shaft of the coiler remain relatively stationary. The shaft is positioned between the fixed member and the rotating member. For example, the rotation mechanism 316 rotates the rotating member 306 (e.g., the front plate 314) in a first direction around the axis of rotation 602 as the fixed member 302 and the shaft 304 remain relatively stationary compared to the rotating member 306, as shown in FIG. 4. In other words, the fixed member 302 and the shaft 304 do not rotate as the rotating member 306 rotates. In general, the rotation of the rotating member 306 causes the second portion 406 of the flexible element 204 to revolve with the guide 312 and the ben coiled around the shaft 304. The shaft 304 is positioned between the fixed member 302 and the rotating member 306. The first direction can be a clockwise direction or a counter-clockwise direction.

At 1106, a second portion of the flexible element is passed through the rotating member. For example, the guide 312 passes the second portion 406 of the flexible element 204 to through the rotating member 306. In some implementations, the guide 312 can include at least one roller 506 to enable the flexible element 204 to pass through the rotating member 306 with less friction and tension in comparison to a fixed side that the flexible element 204 slidably moves across.

At 1108, the second portion of the flexible element is coiled around the shaft. For example, the coiler 102 coils the second portion 406 of the flexible element 204 around the shaft 304. In some implementations, the shaft 304 can include one or more tapered sections 702 to enable the flexible element 204 to start coiling closer to the back plate 310 than the front plate 314, as shown in FIGs. 7, 9, and 10.

## Claims

1. A coiler (102) comprising:
a fixed member (302) is a back plate (310) with an insertion slot (308), the insertion slot (308) configured to secure a first portion (404) of a flexible element (204);
a shaft (304) having first and second ends, the first end positioned proximate to the fixed member (302);
a rotating member (306) positioned proximate to the second end of the shaft (304) and configured to rotatably move about an axis of rotation, the rotating member (306) is a front plate (314) with a guide (312) offset from the axis of rotation, the guide (312) configured to enable a second portion (406) of the flexible element (204) to pass through the front plate (314); and
a rotation mechanism (316) configured to rotate the rotating member (306) in a first direction around the axis of rotation to coil the second portion (406) of the flexible element (204) around the shaft (304), wherein:
the shaft (304) is configured to be stationary compared to the rotating member (306);
the shaft (304) comprises multiple tapered sections (702) such that the shaft (304) has a first diameter proximate to the rotating member (306) that is larger than a second diameter that is proximate to the fixed member (302); and
slopes of the multiple tapered sections (702) form angles relative to a planar surface of the back plate (310) that decrease as the multiple tapered sections (702) are positioned closer to the rotating member (306).

2. The coiler (102) of claim 1, wherein the fixed member (302) and the shaft (304) are configured to be stationary while the rotating member (306) rotates in the first direction.

3. The coiler (102) of claim 2, wherein the insertion slot (308) of the fixed member (302) is configured to hold the first portion (404) of the flexible element (204) at a fixed position while the second portion (406) of the flexible element (204) coils around the shaft (304).

4. The coiler (102) of any preceding claim, wherein the guide (312) of the rotating member (306) is configured to position the second portion (406) of the flexible element (204) along another axis that is approximately parallel to the axis of rotation and perpendicular to a direction of rotation.

5. The coiler (102) of any preceding claim, wherein:
a length of the shaft (304) is positioned along the axis of rotation;
a planar surface of the front plate (314) is approximately perpendicular to the axis of rotation; and
the planar surface of the back plate (310) is approximately perpendicular to the axis of rotation.

6. The coiler (102) of any preceding claim, wherein the guide of the rotating member (306) comprises at least one roller (506) configured to freely rotate to enable the flexible element (204) to pass through the rotating member (306).

7. The coiler (102) of any preceding claim, wherein the rotation mechanism (316) is configured to rotate the rotating member (306) in a second direction around the axis of rotation to uncoil the second portion (406) of the flexible element (204), the second direction being opposite the first direction.

8. The coiler (102) of any preceding claim, wherein the multiple tapered sections (702) of the shaft (304) are configured to cause the second portion (406) of the flexible element (204) to form a first coil proximate to the fixed member (302).

9. The coiler (102) of any preceding claim, wherein the multiple tapered sections (702) have slopes that form angles between approximately 60 and 80 degrees relative to the planar surface (608) of the back plate (310).

10. The coiler (102) of any preceding claim, wherein:
the fixed member 302) comprises a second insertion slot, the second insertion slot configured to receive a first portion of a second flexible element;
the rotating member (306) comprises a second guide that is offset from the axis of rotation, the second guide configured to enable a second portion of the second flexible element to pass through the front plate; and
the rotation mechanism (316) is configured to rotate the rotating member (306) in the first direction around the axis of rotation to coil both the second portion of the first flexible element and the second portion of the second flexible element around the shaft 304).

11. The coiler (102) of any preceding claim, wherein the rotation mechanism (316) comprises at least one of:
an electric motor;
a spring; or
a hand crank.

12. The coiler (102) of claim 11, wherein:
the rotating member (306) has a circular shape and an edge; and
the rotation mechanism (316) comprises:
at least one wheel (802) configured to be in contact with the edge of the rotating member (306); and
the electric motor configured to rotate the at least one wheel (802) to cause the rotating member (306) to rotate.

13. The coiler (102) of claim 12, wherein the rotating member (306) and the at least one wheel (802) comprise intermeshing gears.

14. A system comprising:
at least one flexible element (204); and
a coiler (102) of claims 1 to 13.

15. The system of claim 14, wherein the at least one flexible element comprises at least one of the following:
an electrical cord;
a water hose;
flexible tubing;
rope;
cable; or
chain , or wherein a cross section of the at least one flexible element has a round shape or a rectangular shape.

## Patentansprüche

1. Haspel (102), umfassend:
ein festes Bauteil (302) ist eine Rückplatte (310) mit einem Einführschlitz (308), wobei der Einführschlitz (308) dazu ausgelegt ist, einen ersten Abschnitt (404) eines flexiblen Elements (204) zu befestigen;
eine Welle (304) mit einem ersten und zweiten Ende, wobei das erste Ende in der Nähe des festen Bauteils (302) positioniert ist;
ein drehendes Bauteil (306), das in der Nähe des zweiten Endes der Welle (304) positioniert und dazu ausgelegt ist, sich drehbar um eine Drehachse zu bewegen, wobei das drehende Bauteil (306) eine Frontplatte (314) mit einer Führung (312) ist, die von der Drehachse versetzt ist, wobei die Führung (312) dazu ausgelegt ist, zu ermöglichen, dass ein zweiter Abschnitt (406) des flexiblen Elements (204) durch die Frontplatte (314) passiert; und
einen Drehmechanismus (316), der dazu ausgelegt ist, das drehende Bauteil (306) in einer ersten Richtung um die Drehachse zu drehen, um den zweiten Abschnitt (406) des flexiblen Elements (204) um die Welle (304) zu wickeln, wobei:
die Welle (304) dazu ausgelegt ist, im Vergleich zu dem drehenden Bauteil (306) stationär zu sein;
die Welle (304) mehrere verjüngte Bereiche (702) umfasst, so dass die Welle (304) einen ersten Durchmesser in der Nähe des drehenden Bauteils (306) aufweist, der größer als ein zweiter Durchmesser in der Nähe des festen Bauteils (302) ist; und
Neigungen der mehreren verjüngten Bereiche (702) Winkel relativ zu einer ebenen Fläche der Rückplatte (310) bilden, die sich verringern, wenn die mehreren verjüngten Bereiche (702) näher an dem drehenden Bauteil (306) positioniert sind.

2. Haspel (102) nach Anspruch 1, wobei das feste Bauteil (302) und die Welle (304) dazu ausgelegt sind, stationär zu sein, während sich das drehende Bauteil (306) in der ersten Richtung dreht.

3. Haspel (102) nach Anspruch 2, wobei der Einführschlitz (308) des festen Bauteils (302) dazu ausgelegt ist, den ersten Abschnitt (404) des flexiblen Elements (204) an einer festen Position zu halten, während sich der zweite Abschnitt (406) des flexiblen Elements (204) um die Welle (304) wickelt.

4. Haspel (102) nach einem der vorhergehenden Ansprüche, wobei die Führung (312) des drehenden Bauteils (306) dazu ausgelegt ist, den zweiten Abschnitt (406) des flexiblen Elements (204) entlang einer anderen Achse zu positionieren, die ungefähr parallel zur Drehachse und senkrecht zu einer Drehrichtung ist.

5. Haspel (102) nach einem der vorhergehenden Ansprüche, wobei:
eine Länge der Welle (304) entlang der Drehachse positioniert ist;
eine ebene Fläche der Frontplatte (314) ungefähr senkrecht zur Drehachse steht; und
die ebene Fläche der Rückplatte (310) ungefähr senkrecht zur Drehachse steht.

6. Haspel (102) nach einem der vorhergehenden Ansprüche, wobei die Führung des drehenden Bauteils (306) mindestens eine Rolle (506) umfasst, die dazu ausgelegt ist, sich frei zu drehen, um zu ermöglichen, dass das flexible Element (204) durch das drehende Bauteil (306) passiert.

7. Haspel (102) nach einem der vorhergehenden Ansprüche, wobei der Drehmechanismus (316) dazu ausgelegt ist, das drehende Bauteil (306) in einer zweiten Richtung um die Drehachse zu drehen, um den zweiten Abschnitt (406) des flexiblen Elements (204) abzuwickeln, wobei die zweite Richtung entgegengesetzt zur ersten Richtung ist.

8. Haspel (102) nach einem der vorhergehenden Ansprüche, wobei die mehreren verjüngten Bereiche (702) der Welle (304) dazu ausgelegt sind, zu bewirken, dass der zweite Abschnitt (406) des flexiblen Elements (204) eine erste Windung in der Nähe des festen Bauteils (302) bildet.

9. Haspel (102) nach einem der vorhergehenden Ansprüche, wobei die mehreren verjüngten Bereiche (702) Neigungen aufweisen, die Winkel zwischen ungefähr 60 und 80 Grad relativ zur ebenen Fläche (608) der Rückplatte (310) bilden.

10. Haspel (102) nach einem der vorhergehenden Ansprüche, wobei:
das feste Bauteil (302) einen zweiten Einführschlitz umfasst, wobei der zweite Einführschlitz dazu ausgelegt ist, einen ersten Abschnitt eines zweiten flexiblen Elements aufzunehmen;
das drehende Bauteil (306) eine zweite Führung umfasst, die von der Drehachse versetzt ist, wobei die zweite Führung dazu ausgelegt ist, zu ermöglichen, dass ein zweiter Abschnitt des zweiten flexiblen Elements durch die Frontplatte passiert; und
der Drehmechanismus (316) dazu ausgelegt ist, das drehende Bauteil (306) in der ersten Richtung um die Drehachse zu drehen, um sowohl den zweiten Abschnitt des ersten flexiblen Elements als auch den zweiten Abschnitt des zweiten flexiblen Elements um die Welle (304) zu wickeln.

11. Haspel (102) nach einem der vorhergehenden Ansprüche, wobei der Drehmechanismus (316) mindestens eines von Folgendem umfasst:
einen Elektromotor;
eine Feder; oder
eine Handkurbel.

12. Haspel (102) nach Anspruch 11, wobei:
das drehende Bauteil (306) eine Kreisform und eine Kante aufweist; und
der Drehmechanismus (316) Folgendes umfasst:
mindestens ein Rad (802), das dazu ausgelegt ist, mit der Kante des drehenden Bauteils (306) in Kontakt zu sein; und
der Elektromotor dazu ausgelegt ist, das mindestens eine Rad (802) zu drehen, um zu bewirken, dass sich das drehende Bauteil (306) dreht.

13. Haspel (102) nach Anspruch 12, wobei das drehende Bauteil (306) und das mindestens eine Rad (802) ineinandergreifende Zahnräder umfassen.

14. System, umfassend:
mindestens ein flexibles Element (204); und
eine Haspel (102) nach den Ansprüchen 1 bis 13.

15. System nach Anspruch 14, wobei das mindestens eine flexible Element mindestens eines der Folgenden umfasst:
ein Stromkabel;
einen Wasserschlauch;
eine flexible Leitung;
ein Seil;
ein Kabel; oder
eine Kette, oder wobei ein Querschnitt des mindestens einen flexiblen Elements eine runde Form oder eine rechteckige Form aufweist.

## Revendications

1. Bobinoir (102) comprenant :
un élément fixe (302) est une plaque arrière (310) dotée d'une fente d'insertion (308), la fente d'insertion (308) étant conçue pour fixer une première partie (404) d'un élément flexible (204) ;
un arbre (304) ayant des première et seconde extrémités, la première extrémité étant positionnée à proximité de l'élément fixe (302) ;
un élément rotatif (306) positionné à proximité de la seconde extrémité de l'arbre (304) et conçu pour tourner autour d'un axe de rotation, l'élément rotatif (306) étant une plaque avant (314) dotée d'un guide (312) décalé par rapport à l'axe de rotation, le guide (312) étant conçu pour permettre à une seconde partie (406) de l'élément flexible (204) de passer à travers la plaque avant (314) ; et
un mécanisme de rotation (316) conçu pour faire tourner l'élément rotatif (306) dans une première direction autour de l'axe de rotation pour enrouler la seconde partie (406) de l'élément flexible (204) autour de l'arbre (304), dans lequel :
l'arbre (304) est conçu pour être fixe par rapport à l'élément rotatif (306) ;
l'arbre (304) comprend de multiples sections coniques (702) de telle sorte que l'arbre (304) a un premier diamètre proche de l'élément rotatif (306) qui est plus grand qu'un second diamètre proche de l'élément fixe (302) ; et
des pentes des multiples sections coniques (702) forment des angles par rapport à une surface plane de la plaque arrière (310) qui diminuent à mesure que les multiples sections coniques (702) sont positionnées plus proches de l'élément rotatif (306).

2. Bobinoir (102) selon la revendication 1, dans lequel l'élément fixe (302) et l'arbre (304) sont conçus pour être fixes pendant que l'élément rotatif (306) tourne dans la première direction.

3. Bobinoir (102) selon la revendication 2, dans lequel la fente d'insertion (308) de l'élément fixe (302) est conçue pour retenir la première partie (404) de l'élément flexible (204) à une position fixe pendant que la seconde partie (406) de l'élément flexible (204) s'enroule autour de l'arbre (304) .

4. Bobinoir (102) selon l'une quelconque des revendications précédentes, dans lequel le guide (312) de l'élément rotatif (306) est conçu pour positionner la seconde partie (406) de l'élément flexible (204) le long d'un autre axe qui est approximativement parallèle à l'axe de rotation et perpendiculaire à un sens de rotation.

5. Bobinoir (102) selon l'une quelconque des revendications précédentes, dans lequel :
une longueur de l'arbre (304) est positionnée le long de l'axe de rotation ;
une surface plane de la plaque avant (314) est approximativement perpendiculaire à l'axe de rotation ; et
la surface plane de la plaque arrière (310) est approximativement perpendiculaire à l'axe de rotation.

6. Bobinoir (102) selon l'une quelconque des revendications précédentes, dans lequel le guide de l'élément rotatif (306) comprend au moins un rouleau (506) conçu pour tourner librement pour permettre à l'élément flexible (204) de passer à travers l'élément rotatif (306).

7. Bobinoir (102) selon l'une quelconque des revendications précédentes, dans lequel le mécanisme de rotation (316) est conçu pour faire tourner l'élément rotatif (306) dans une seconde direction autour de l'axe de rotation pour dérouler la seconde partie (406) de l'élément flexible (204), la seconde direction étant opposée à la première direction.

8. Bobinoir (102) selon l'une quelconque des revendications précédentes, dans lequel les multiples sections coniques (702) de l'arbre (304) sont conçues pour amener la seconde partie (406) de l'élément flexible (204) à former une première bobine à proximité de l'élément fixe (302).

9. Bobinoir (102) selon l'une quelconque des revendications précédentes, dans lequel les multiples sections coniques (702) possèdent des pentes qui forment des angles entre environ 60 et 80 degrés par rapport à la surface plane (608) de la plaque arrière (310).

10. Bobinoir (102) selon l'une quelconque des revendications précédentes, dans lequel :
l'élément fixe (302) comprend une seconde fente d'insertion, la seconde fente d'insertion étant conçue pour recevoir une première partie d'un second élément flexible ;
l'élément rotatif (306) comprend un second guide qui est décalé par rapport à l'axe de rotation, le second guide étant configuré pour permettre à une seconde partie du second élément flexible de passer à travers la plaque avant ; et
le mécanisme de rotation (316) est conçu pour faire tourner l'élément rotatif (306) dans la première direction autour de l'axe de rotation pour enrouler à la fois la seconde partie du premier élément flexible et la seconde partie du second élément flexible autour de l'arbre (304).

11. Bobinoir (102) selon l'une quelconque des revendications précédentes, dans lequel le mécanisme de rotation (316) comprend au moins l'un des éléments suivants :
un moteur électrique ;
un ressort ; ou
une manivelle.

12. Bobinoir (102) selon la revendication 11, dans lequel :
l'élément rotatif (306) a une forme circulaire et un bord ; et
le mécanisme de rotation (316) comprend :
au moins une roue (802) conçue pour être en contact avec le bord de l'élément rotatif (306) ; et
le moteur électrique conçu pour faire tourner la ou les roues (802) pour entraîner l'élément rotatif (306) en rotation.

13. Bobinoir (102) selon la revendication 12, dans lequel l'élément rotatif (306) et la ou les roues (802) comprennent des roues dentées engrenées.

14. Système comprenant :
au moins un élément flexible (204) ; et
un bobinoir (102) selon les revendications 1 à 13.

15. Système selon la revendication 14, dans lequel le ou les éléments flexibles comprennent au moins l'un des éléments suivants :
un cordon électrique ;
un tuyau à eau ;
des tubes flexibles ;
une corde ;
un câble ; ou
une chaîne, dans lequel une section transversale du ou des éléments flexibles présente une forme ronde ou une forme rectangulaire.
